# EUROPÄISCHE PATENTSCHRIFT

(11) **EP 0 712 343 B1**
(45) Veröffentlichungstag und Bekanntmachung des Hinweises auf die Patenterteilung: **30.12.1998**
(21) Anmeldenummer: 94922832.4
(22) Anmeldetag: 02.08.1994
(51) Int. Cl.: B23B 51/02

(54) **WENDELBOHRER**
TWIST DRILL
FORET HELICO DAL

(30) Priorität: 06.08.1993 DE 9311715 U
(43) Veröffentlichungstag der Anmeldung: 22.05.1996
(73) Patentinhaber: KENNAMETAL HERTEL AG Werkzeuge + Hartstoffe, 90766 Fürth (DE)
(72) Erfinder: JUST, Werner, D-91126 Schwabach (DE); MÜHLFRIEDEL, Dieter, D-91320 Ebermannstadt (DE)
(74) Vertreter: Tergau, Enno, Dipl.-Ing.
(86) Internationale Anmeldenummer: DE9400895
(87) Internationale Veröffentlichungsnummer: WO9504624

(56) Entgegenhaltungen:
- DE-A- 3 628 262
- DE-B- 1 106 144
- PATENT ABSTRACTS OF JAPAN vol. 9, no. 29 (M-356) (1752) 7. Februar 1985 & JP,A,59 175 912 (SUMITOMO) 5. Oktober 1984
- PATENT ABSTRACTS OF JAPAN vol. 13, no. 55 (M-795) (3403) 8. Februar 1989 & JP,A,63 260 713 (SUMITOMO) 27. Oktober 1988

## Beschreibung

Die Erfindung betrifft einen Wendelbohrer, insbesondere zur Bearbeitung von Metallen. Derartige Bohrer haben üblicherweise einen zylindrischen Grundkörper, der sich in einen Schaft und ein Schneidteil untergliedert. In die Mantelfläche des Schneidteils sind mehrere Spannuten eingeformt, die sich wendelförmig um die Mittellängsachse des Bohrers bzw. dessen Bohrerkern erstrecken und in dessen die Bohrerspitze bildende Stirnseite münden. Bei Bohrern, die für eine Sollbohrtiefe bestimmt sind, die größer oder gleich dem Dreifachen ihres Bohrerdurchmessers ist, spricht man von Langbohrern. Bei Langbohrern beträgt also die Mindestbohrtiefe das Dreifache des Bohrerdurchmessers.

Bei Langbohrern tritt zum einen aufgrund des Verhältnisses von Bohrerlänge zu Bohrerdurchmesser das Problem auf, daß unerwünschte Torsionsschwingungen auftreten können. Ein weiteres Problem ist die Spanabfuhr bei zunehmender Bohrtiefe. Beim Bohren wird im Wirkbereich der Bohrerspitze bzw. der Hauptschneiden des Bohrers der abgehobene Span in der Spannut zwischen der Spanfläche, also der Spannutoberfläche, einerseits und der Innenwand des Bohrlochs andererseits eingerollt und zu einem etwa wendelförmigen Gebilde geformt. Im weiteren Verlauf des Bohrvorgangs wird dieser Span bzw. Bruchstücke davon in der Spannut in Richtung zum Schaftende des Bohrers weiterbefördert. Dabei reibt der Span sowohl an der Spanfläche als auch an der Innenwand des Bohrlochs. Diese Reibung vermindert die Spanabflußgeschwindigkeit, was im Endeffekt zu einem Spänestau führen kann. Aufgrund des weiteren Nachtransports von Spänen kommt es zu einer weiteren Zunahme der Reibungskräfte und damit zu einem erheblichen Anstieg der Schnittkräfte und einer verstärkten Wärmeentwicklung. Die Folge ist ein überproportionaler Verschleiß der Bohrerhauptschneiden. Im Extremfall kann ein Spänestau zu einem Bruch des Bohrers führen.

Automatische Bohrmaschinen sind häufig mit einem elektronischen Überwachungssystem gekoppelt. Derartige elektronische Überwachungssysteme würden ein überproportionales Ansteigen der Schnittkräfte als einen Hinweis auf einen sehr großen Bohrerverschleiß bzw. als Schneidenausbrüche werten und die Bohrmaschine anhalten. Tatsächlich wäre jedoch die Bohrerschneide noch gar nicht verschlissen. Vielmehr wäre nur ein Spänestau vorhanden, welcher durch das alleinige Abschalten der Maschine nicht behebbar ist. Hierzu muß nämlich das Bohrwerkzeug weiterlaufen, jedoch ohne Vorschub, um den Spänestau zu beseitigen, also das angesammelte Spanmaterial über die Spannut aus dem Bohrlochbereich zu entfernen. Anschließend kann dann normal weitergebohrt werden.

Bei einem aus DE-DA-39 27 615 bekannten Langbohrer ist das Problem der Torsionsschwingungen dadurch gelöst, daß der Bohrerkern von der Spitze zum Schaft hin zunimmt. Durch diese Maßnahme ist aber die Spanabfuhr behindert, da die Tiefe der Spannut mit zunehmender Entfernung von der Bohrerspitze abnimmt. Um hier Abhilfe zu schaffen, wurden bei dem bekannten Bohrer die Spannuten stark verbreitert, was sich in einem Verhältnis von Rückenbreite bzw. Nebenfreifläche zur Nutbreite von 0,8-0,9 ausdrückt. Diese Spannutverbreiterung kann aber nur bedingt die Spanabfuhr verbessern, da die Tiefe der Spannut mit zunehmender Entfernung von der Bohrerspitze abnimmt. Ein im Wirkbereich der Bohrerhauptschneiden gebildeter Rund- bzw. Wendelspan mit einem der Spannuttiefe im Bohrerspitzenbereich entsprechenden Durchmesser würde daher mit zunehmender Entfernung von der Bohrerspitze immer weniger in die von der Spanfläche und der Bohrungsinnenwand umgrenzte Spankammer passen. Als Folge davon würde der Span vermehrt an der Spanfläche und der Innenwandung des Bohrlochs unter Verminderung der Spanabflußgeschwindigkeit reiben.

Aus dem Stand der Technik sind außerdem Wendelbohrer bekannt, deren Kerndurchmesser sich einerseits zum Schaft hin verdickt und deren Drallwinkel sich andererseits zur Verbesserung der Spanabfuhr in derselben Richtung verkleinert.

In der DE 1 106 144, die den Oberbegriff des Anspruchs 1 Definiert, ist ein Wendelbohrer beschrieben, bei dem die Tiefe der Spannut von der Spitze zum Schaft hin zunimmt. Dadurch ist zwar die Spanabfuhr aufgrund der geringeren Reibung des abtransportierten Spans in den spitzenfernen Bereichen verbessert. Bei dieser Lösung ist aber nicht bedacht worden, daß durch die nachschleifbedingte Verkürzung des Bohrers die Spannuttiefe im Spitzenbereich, d.h. also im Spanbildungsbereich des Bohrers, gegenüber der ursprünglichen Spannuttiefe zunimmt. Die ursprünglich beim nichtverkürzten Bohrer vorhandenen Spanbildungs- und Spanabfuhreigenschaften werden daher mit zunehmnder Verkürzung immmer mehr verändert.

Davon ausgehend ist es die Aufgabe der Erfindung, einen Wendelbohrer so zu gestalten, daß der geschilderte Spänestau unterbleibt und daß die Spanbildungs- und Spanabfuhreigenschaften des Bohrers auch bei mehrfachem Nachschliff erhalten bleiben. Zur Lösung dieser Aufgabe wird der Kerndurchmesser des Bohrers von der Bohrerspitze zum Schaft hin zumindest in einem sich an die Bohrerspitze anschließenden Schneidteilbereich kontinuierlich verkleinert. Zusätzlich zu dieser Maßnahme ist die Querschnittsform der Spannut bzw. der Krümmumgsverlauf der die Innenwandung der Spannut bildenen Spanfläche so ausgestaltet, daß der für die Spanformung maßgebliche Hauptspanformbereich der Spanfläche einen Spanformradius aufweist, der mit zunehmender Entfernung von der Bohrerspitze zunimmt. Die Verkleinerung des Kerndurchmessers zieht es zwangsweise nach sich, daß sich die Tiefe der Spannut, d.h. also der Radialabstand zwischen der Bohrloch-Innenwand und dem den Kerndurchmesser tangierenden Spanflächenbereich vergrößert. Obwohl mit der Vergrößerung der Spannuttiefe auch eine Vergrößerung der Querschnittsfläche bzw. des Volumens der Spannut einhergeht, ist nicht diese Flächen- oder Volumenvergrößerung entscheidend, sondern praktisch alleine die Vergrößerung der Spannuttiefe und die Ausgestaltung des Hauptspanformbereiches. Der im Wirkbereich der Bohrerspitze abgehobene Span weist einen Durchmesser auf, der in etwa der Tiefe der Spannut im Spitzenbereich des Bohrers entspricht. Während der Span im spitzennahen Bereich des Bohrers sowohl an der Spanfläche als auch an der Bohrloch-Innenwand reibt, wird er im spitzenfernen Bereich des Bohrloches nahezu ausschließlich von der Spanfläche der Spannut und dadurch reibungsärmer geführt. Durch die nunmehr praktisch fehlende Reibung an der Bohrloch-Innenwand verringert sich zum einen der Kraftaufwand für den Weitertransport des Spans. Durch diese widerstandsärmere Führung des Spans wird sein Abbremsen verhindert bzw. verringert, wodurch die Spanabfuhrgeschwindigkeit praktisch über die gesamte Schneidlänge des Wendelbohrers konstant bleibt und ein Spänestau wirksam vermieden ist. Zum anderen verringert die reibungsärmere Führung des Spans auf der Spanfläche die reibungsbedingte Wärmeentwicklung.

Der die Spanformung hauptsächlich beeinflussende Bereich der Spanfläche ist jener Flächenabschnitt, der den kleinsten Krümmungsradius aufweist. Dieser im folgenden mit Spanformradius bezeichnete Krümmungsradius nimmt erfindungsgemäß mit zunehmender Entfernung von der Bohrerspitze zu. Dabei ist nicht eine etwaige Vergrößerung der Querschnittsfläche der Spannut entscheidend, sondern der folgende Effekt: Bei der Formung des Spans bestimmt der Spanformradius den Krümmungsgrad bzw. den Durchmesser eines wendelförmig gewundenen Spans. Würde der Spanformradius über die Schneidlänge des Wendelbohrers konstant bleiben, wäre die Spanformungseigenschaft der Spanfläche an einer spitzenfernen Stelle nicht mehr optimal. Für die Spanformung ist nämlich nicht nur die Spanfläche allein, sondern auch die Bohrloch-Innenwandung und insbesondere das Verhältnis aus der Differenz zwischen dem Bohrerdurchmesser und dem Bohrerkerndurchmesser und dem Spanformradius mitverantwortlich. Da mit zunehmender Entfernung von der Bohrerspitze die Spannuttiefe, d.h. also der Radialabstand zwischen dem für die Spanformung maßgeblichen Spanflächenabschnitt und der Bohrloch-Innenwand bzw. die Differenz zwischen dem Bohrerdurchmesser und dem Bohrerkerndurchmesser zunimmt, würde das genannte Abmessungsverhältnis bei gleichbleibendem Spanformradius mit zunehmender Entfernung von der Bohrerspitze weiter vom optimalen Wertebereich wegliegende Werte annehmen. Die Spanformungseigenschaften spitzenferner Spannutbereiche, die nach mehrfachem Nachschleifen den Wirkbereich des Bohrers bilden würden, würden sich zunehmend verschlechtern.

Indem zusätzlich die Querschnittsform der Spannut bzw. der Krümmungsverlauf der Spanfläche, ebenfalls im Querschnitt gesehen, im wesentlichen konstant gehalten wird, ist das Spanbildungs- und Spanformverhalten über den gesamten nachschleifbaren Bereich praktisch unverändert. Dies ist insbesondere bei sehr hochwertigen Bohrern wie Vollhartmetallbohrern ein entscheidender Kostenvorteil. Bekanntermaßen wird beim Nachschleifen eines Wendelbohrers dessen Bohrer- bzw. Schneidlänge durch Materialabtrag im Bereich der Bohrerspitze verkürzt. Eine nur auf die Vergrößerung der Querschnittsfläche der Spannut abzielende Spannutaufweitung würde einem vielfachen Nachschleifen eines Wendelbohrers zuwiderlaufen, da durch die Aufweitung der Spannut in den entsprechenden spitzenfernen Bereichen völlig andere, zur Spanbildung und -formung ungeeignete Spannut-Querschnittsformen bzw. Spanflächenkrümmungen vorhanden sind. Demgegenüber ist bei dem erfindungsgemäßen Bohrer die Querschnittsform der Spannut bzw. deren Krümmungsverlauf vorzugsweise über den gesamten zum Bohren nutzbaren Bereich, also die Schneidlänge des Bohrerschneidteils, im wesentlichen konstant. Nach jedem Nachschleifvorgang ist somit im Spitzenbereich des Wendelbohrers stets eine zur Bildung und Formung des Spans geeignete Spanflächenform vorhanden. Dies ist naturgemäß nur erreichbar, wenn, wie in Anspruch 1 angegeben, sich der Kerndurchmesser des erfindungsgemäßen Wendelbohrers nicht sprunghaft, sondern kontinuierlich verringert. Die kontinuierliche Verringerung des Bohrerkerndurchmessers muß sich aber nicht zwangsweise über die gesamte Schneidteillänge erstrecken. Mit häufig nachgeschliffenen und nur noch einen Teil ihrer ursprünglichen Länge aufweisenden Bohrern können nämlich von Haus aus keine allzu großen Bohrtiefen mehr erreicht werden. Da sich das Problem der Spanabfuhr naturgemäß mit abnehmender Bohrtiefe verringert, kann es daher zweckmäßig sein, auf eine weitere Verringerung des Bohrerkerndurchmessers im schaftnahen Schneidteilbereich des Bohrers zu verzichten. Der Verringerung des Bohrerkerndurchmessers sind außerdem bei sehr langen Bohrern aus Gründen der Stabilität Grenzen gesetzt.

Das oben erwähnte Abmessungsverhältnis soll als größten Wert einen Wert von 4,0 annehmen. Dieser Wert wird erreicht, wenn der Spanformradius halb so groß ist wie die Spannuttiefe. Erfindungsgemäß kann der Wert des genannten Abmessungsverhältnisses zwischen 4,0 und 2,7 schwanken. Der Wert von 2,7 wird erreicht, wenn der Spanformradius etwa 3/4 der Spannuttiefe entspricht. Innerhalb des beanspruchten Wertebereiches ist eine zufriedenstellende Spanformung und Spanabfuhr gewährleistet. Vorteilhafterweise wird ein einmal gewähltes Abmessungsverhältnis über die Schneidlänge bzw. eine gegebenenfalls kürzer bemessene Nachschleiflänge beibehalten, damit nach jedem Nachschleifen des Wendelbohrers dieselben geometrischen Verhältnisse und damit Spanformungseigenschaften im Wirkbereich der Bohrerspitze vorliegen. Es ist aber auch denkbar, daß sich das genannte Verhältnis mit zunehmender Entfernung von der Bohrerspitze verkleinert. Die Verkleinerung sollte jedoch nicht mehr als maximal 40% von dem an der Bohrerspitze ursprünglich vorhandenen Wert betragen.

Der Kerndurchmesser eines erfindungsgemäßen Wendelbohrers wird so gewählt, daß er in einem Bereich von 0,22 D-0,35 D liegt, wobei D der Durchmesser des Bohrers bzw. des Schneidteils ist. Der Wert 0,22 D ist das Minimalmaß für den Bohrerkerndurchmesser. Würde der Bohrerkern noch dünner ausgebildet, müßte ein Bohrerbruch befürchtet werden. Der Wert 0,35 D benennt dagegen die Untergrenze der Spannuttiefe. Würde der Bohrerkern noch dicker gemacht werden, würde die Spannuttiefe zu klein werden, um den erfindungsgemäßen Effekt der reibungsarmen Spanabfuhr noch zu gewährleisten. Die Abnahme des Kerndurchmessers mit zunehmender Entfernung von der Bohrerspitze ist vorteilhafterweise so ausgelegt, daß sie 0,2 mm-0,8 mm, bezogen auf 100 mm Bohrerlänge, beträgt. Der erfindungsgemäße Wendelbohrer ist vorzugsweise als Vollhartmetallbohrer ausgeführt.

Die erfindungsgemäße Ausgestaltung der Spannut ermöglicht es also, daß der Wendelbohrer innerhalb eines sehr weiten Bereiches nachgeschliffen werden kann. Es ist sogar möglich, daß ein häufig nachgeschliffener Wendelbohrer, der durch das Nachschleifen zum Bohren tiefer Bohrungen zu kurz geworden ist, weiterhin für kürzere Bohrtiefen verwendbar ist. Durch die kontinuierliche Vergrößerung der Spannuttiefe und die Beibehaltung der Spannut-Querschnittsform über nahezu die gesamte Schneidlänge läßt sich der erfindungsgemäße Wendelbohrer auch noch im Vergleich zu seiner Fabrikationslänge in erheblich gekürztem Zustand verwenden.

Zudem führt die erfindungsgemäße Ausgestaltung des Wendelbohrers zu einer Reduzierung der Schnittkräfte. Diese Reduzierung der Schnittkräfte bewirkt unmittelbar eine Verminderung der Belastung des Schneidstoffes selbst. Die genannten Faktoren bedingen wiederum eine erhebliche Verbesserung der Standzeiten. Versuche haben ergeben, daß die Standzeiten mit einem erfindungsgemäßen Bohrer verdoppelt bzw. verdreifacht werden können. Die mit der beschriebenen Standzeitenerhöhung verbundenen Steigerungen von Wirtschaftlichkeit und Produktivität sind evident.

Im folgenden wird ein Ausführungsbeispiel des erfinderischen Wendelbohrers beschrieben und anhand der beigefügten Diagramme werden weitere Vorteile des erfindungsgemäßen Bohrers deutlich gemacht. Es zeigen:
- Fig.1: eine Seitenansicht des erfindungsgemäßen Wendelbohrers,
- Fig.2: eine schematische Seitenansicht des Bohrers gemäß Fig.1 mit schematisch angedeutetem aufgebrochenem Bohrerkern,
- Fig.3: einen Querschnitt gemäß III-III in Fig.1,
- Fig.4: einen Querschnitt gemäß der Linie IV-IV in Fig.1,
- Fig.5: einen Querschnitt längs der Linie V-V in Fig.1,
- Fig.6: einen Querschnitt entlang der Linie VI-VI in Fig.1,
- Fig.7: eine Darstellung, bei der die Querschnitte gemäß Fig.3-Fig.5 in vergrößerter Darstellung konkruent übereinander gelegt sind,
- Fig.8: einen Querschnitt gemäß Fig.4, jedoch mit schematisch eingezeichnetem Span, und
- Fig.9: einen Querschnitt gemäß Fig.5, ebenfalls mit in der Spannut angeordnetem Span.

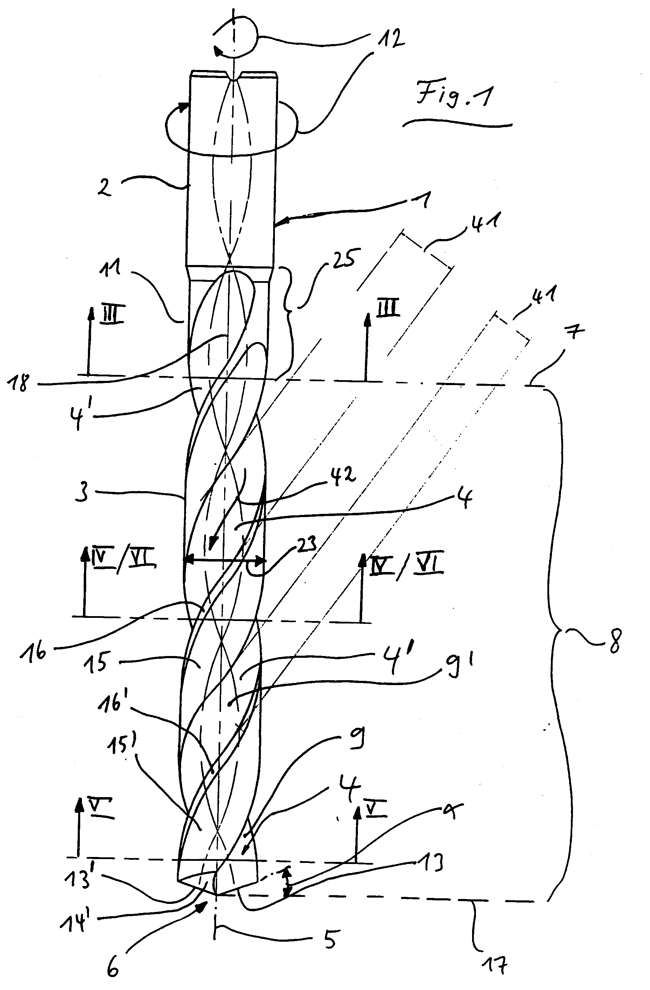

Fig.1 zeigt einen Wendelbohrer (im folgenden kurz Bohrer genannt) mit einem im wesentlichen zylindrischen Grundkörper 1, der in einen Schaft 2 und ein Schneidteil 3 untergliedert ist. In die Mantelfläche des Schneidteils 3 sind 2 sich diametral gegenüberliegende Spannuten 4,4' eingeformt. Die Spannuten erstrecken sich wendelförmig um die Mittellängsachse 5 des Bohrers und münden in der die Bohrerspitze 6 bildenden Stirnseite des Bohrers. Das Schneidteil 3 seinerseits läßt sich in zwei Abschnitte unterteilen, nämlich einem sich von der Bohrerspitze 6 bis zur Hilfslinie 7 erstreckenden nutzbaren Abschnitt, wobei dieser Abschnitt die Schneidlänge 8 des Schneidteils 3 ist. Zwischen dem die Schneidlänge 8 definierenden Abschnitt und dem Schaft 2 ist ein Zwischenabschnitt angeordnet, in dem die Spannuten 4,4' abflachen und in die Mantelfläche des Schneidteils 3 übergehen, und der den Auslauf 11 des Schneidteils 3 bildet. Die Mittellängsachse 5 des Bohrers ist gleichzeitig dessen Rotationsachse, um die er in Richtung des Pfeiles 12 während seiner Anwendung drehbar ist.

Der Bohrer gemäß Fig.1 weist im übrigen die bei Wendelbohrern üblichen Gestaltungsmerkmale auf, wie zwei Hauptschneiden 13,13', zwei Hauptfreiflächen 14,14', zwei Nebenfreiflächen 15,15' mit jeweils einer Führungsphase 16,16'. Die Hauptschneiden 13,13' bilden mit einer angenommenen Arbeitsebene 17 den Seitenfreiwinkel α. Der Drallwinkel der Spannuten 4,4' ist vorzugsweise über die gesamte Schneidlänge 8 konstant.

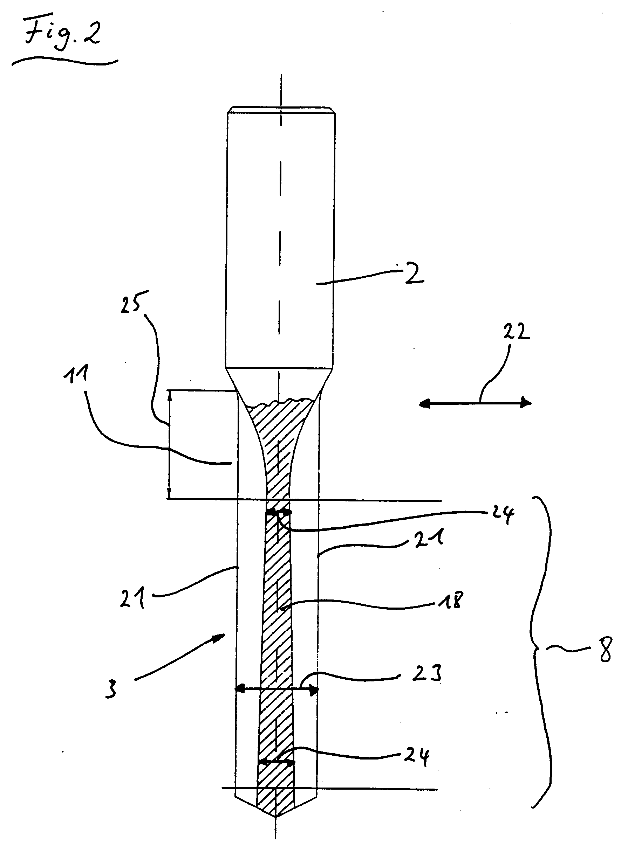

In Fig.2 ist das Schneidteil 3 mit geschnittenem Bohrerkern 18 dargestellt. Die den Bohrerkern 18 flankierenden Hilfslinien 21 markieren die Erstreckung des Schneidteils 3 in Querrichtung 22. Sie stellen quasi die Längsschnittlinien eines gedachten Hüllmantels mit einem dem Durchmesser 23 des Schneidteils 3 entsprechenden Durchmesser dar. Wie aus Fig. 2 deutlich erkennbar ist, verjüngt sich der Bohrerkern 18 von der Bohrerspitze 6 in Richtung zum Schaft 2 hin kontinuierlich. Der Bohrerkerndurchmesser 24 ist somit im spitzennahen Bereich des Schneidteils 3 größer als in dessen schaftnahen Bereich. Die Bohrerkernverjüngung ist so gewählt, daß die Abnahme des Bohrerkerndurchmessers 24 auf einer Länge von 100 mm 02,-0,8 mm beträgt. Der Auslauf 11 des Bohrers weist eine Länge auf, die das 1,5-fache des Bohrerdurchmessers 23 beträgt.

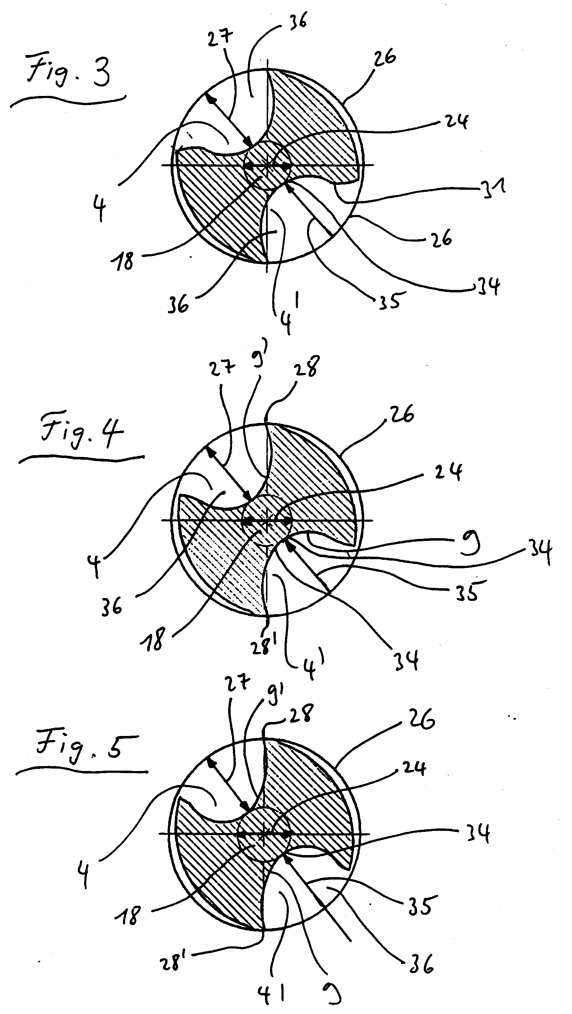

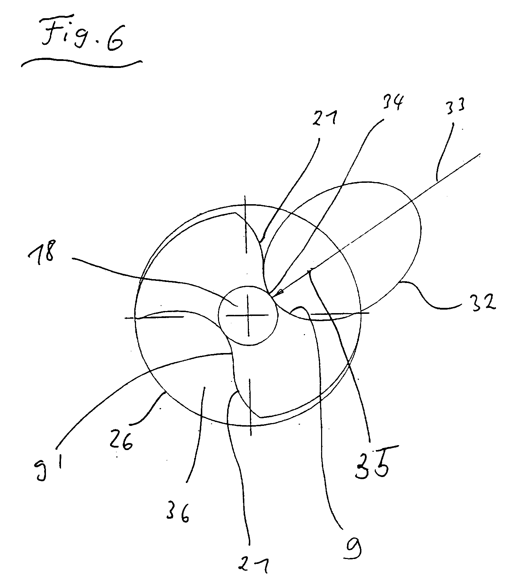

In den Querschnittdarstellungen gemäß Fig.3-5 ist die kreisförmige, den geschnittenen Schneidteil umschreibende Linie die Hüllinie 26 der Zylindermantelfläche des Schneidteils 3. Wie aus den Fig.3-5 deutlich erkennbar ist, nimmt der Bohrerkerndurchmesser 24 von Fig.5, die einen Querschnitt im Spitzenbereich (Linie V-V in Fig. 1) des Bohrers zeigt, nach Fig.3, die einen Querschnitt im schaftnahen Bereich (Linie III-III in Fig. 1) des Schneidteils 3 darstellt, ab. Mit dieser Abnahme ist eine Zunahme der Spannuttiefe 27 verknüpft. Die Spannuttiefe 27 ist aus Gründen der Übersichtlichkeit nur in der einen Spannut 4 der beiden Spannuten 4,4' angedeutet. Aus den Fig.3-5, sowie aus Fig.6, geht der Krümmungsverlauf der Spanfläche 9,9' hervor: Die Spanfläche erstreckt sich beginnend von der die Nebenschneide 28,28' bildenden vorderen Kante der Führungsphase 16,16' konvex und im wesentlichen radial nach innen auf die Mittellängsachse 5 zu und tangiert im Zentrum des Schneidteils 3 den Bohrerkern. Von dort erstreckt sie sich mit einer angenähert gleichen Krümmung wieder radial nach außen und ändert an einem Krümmungsumkehrpunkt 31 ihre Krümmungsrichtung. Der sich ab dem Krümmungsumkehrpunkt 31 radial nach außen erstreckende Bereich der Spanfläche 9,9' hat naturgemäß auf die Formgebung eines von einem Werkstück abgehobenen Spans praktisch keinerlei Einfluß. Dieser Bereich wird üblicherweise als Rückenkantenbruch bezeichnet und ist fertigungstechnisch bedingt.

Der Kurvenverlauf der Spanfläche 9,9' kann, im Querschnitt gesehen, angenähert als Bogenabschnitt einer Ellipse 32 (Fig.6) angesehen werden. Die Längsachse 33 der Ellipse 32 ist dabei etwa radial zur Mittellängsachse 5 des Bohrers ausgerichtet. Es ist aber auch denkbar, daß der Kurvenverlauf der Spanfläche 9,9' mehr einem Kreisbogen angenähert ist.

Aus den Fig.3-5 ist weiterhin erkennbar, daß der an den Bohrerkern 18 angrenzende und für die Spanformung und insbesondere für den Krümmungsradius des Spans hauptsächlich maßgebende Hauptspanformbereich 34 einen im folgenden mit Spanformradius 35 bezeichneten Krümmungsradius aufweist, der von Fig.5 nach Fig.3 zunimmt. Der für die Formgebung maßgebliche Radius der Spanfläche 9,9' ist somit der Spanformradius 35. Der Spanformradius 35 nimmt mit zunehmender Entfernung von der Bohrerspitze 6 zu. Mit anderen Worten flacht die Krümmung des Hauptspanformbereiches 34 zusehends ab.

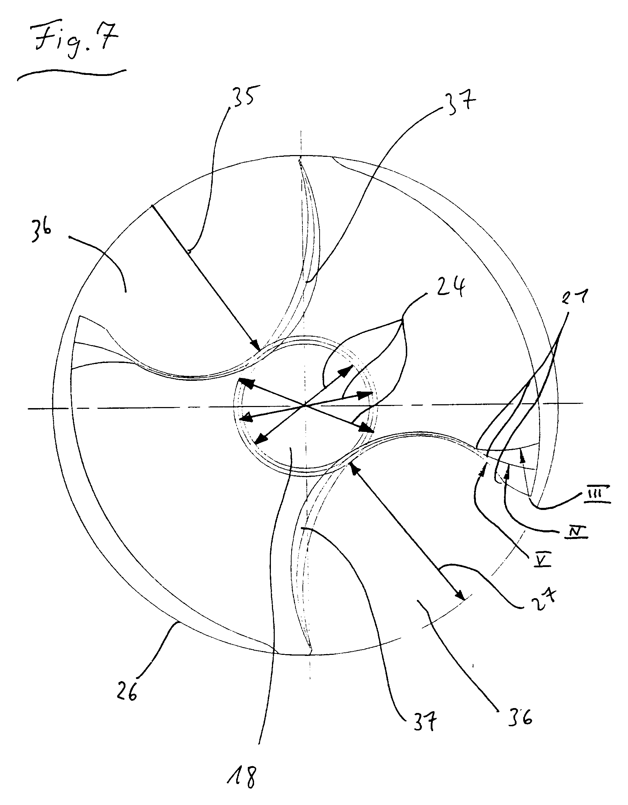

In der Darstellung gemäß Fig.7 sind die Querschnitte gemäß Fig.3-5 konkruent übereinandergelegt und vergrößert dargestellt. Die einzelnen Kurvenzüge sind entsprechend den Schnittlinien in Fig.1 mit III, IV und V gekennzeichnet. Aus dieser Darstellung geht nochmals deutlich die Abnahme des Bohrerkerndurchmessers 24 hervor. Anhand dieser Darstellung ist auch erkennbar, daß neben der Zunahme der Spannuttiefe 27 und der sich daraus ergebenden Querschnittsflächenvergrößerung der Spankammer 36 eine zusätzliche Vergrößerung der Spankammer 36 vorhanden ist. Diese kommt dadurch zustande, daß der sich an die Führungsphase 16,16' anschließende Spanflä-chenbereich mit zunehmender Entfernung von der Bohrerspitze 6 weiter nach innen ausgebuchtet ist. Der sich daraus ergebende Querschnittsflächenzuwachs 37 entspricht dem von den Querschnittslinien III und V begrenzten, etwa sichelartigen und sich von der Führungsphase 16,16' etwa bis zum Bohrerkern 18 erstreckenden Flächensegment. Dieser Flächenzuwachs ist jedoch, wie später noch deutlicher erläutert wird, von untergeordneter Bedeutung für den erfindungsgemäßen Wendelbohrer. Aus Fig.7 ist schließlich noch erkennbar, wie sich der Verlauf des Rückenkantenbruchs, also jenes sich vom Krümmungsumkehrpunkt 31 radial nach außen erstreckenden Spanflächenbereiches, mit zunehmender Entfernung von der Bohrspitze 6 verändert. Diese Veränderung ist im wesentlichen fertigungsbedingt und hat weder auf die Spanabfuhr noch auf das Spanformverhalten des vorliegenden Bohrers einen entscheidenden Einfluß. Allerdings wird durch diese Aufweitung die Zuführung von Kühlflüssigkeit verbessert. Aufgrund der sich mit zunehmender Entfernung von der Bohrerspitze 6 ändernden Verlaufs des Rückenkantenbruchs ergibt sich eine zunehmende Aufweitung der Spannut 4,4'. Diese Aufweitung ist auch aus Fig.1 erkennbar, in der die Spannutenbreite 41, gemessen quer zur Wendelrichtung 42 der Spannut 4,4', dargestellt ist. Die Spannutenbreite 41 nimmt in Richtung auf den Schaft 2 zu, so daß die in der Draufsicht gern. Fig.1 benachbarten Spannuten 4 und 4' sich in ihrer Spannutenbreite 41 unterscheiden. Der weiter schaftwärts angeordnete Spannutbereich weist eine größere Breite auf Spannbreite 41.

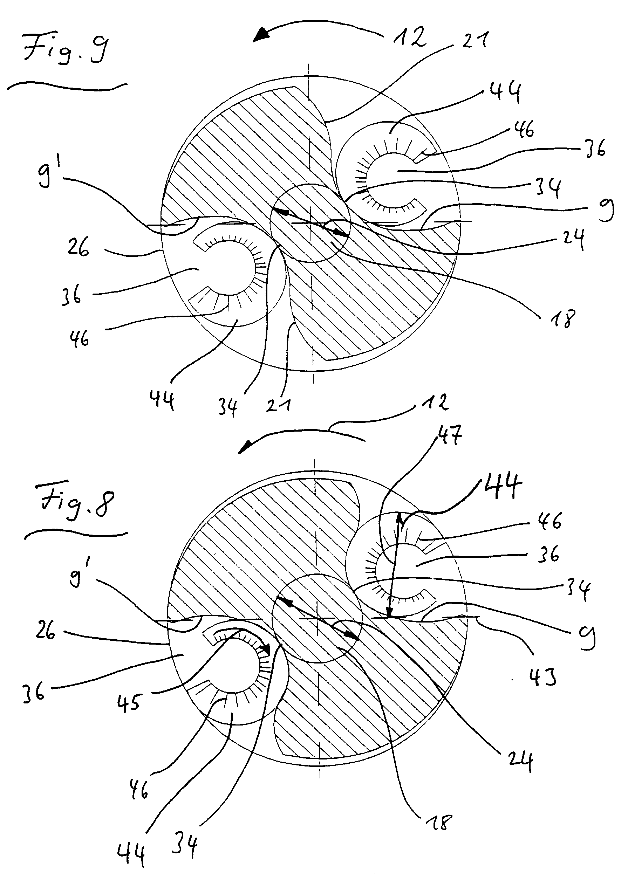

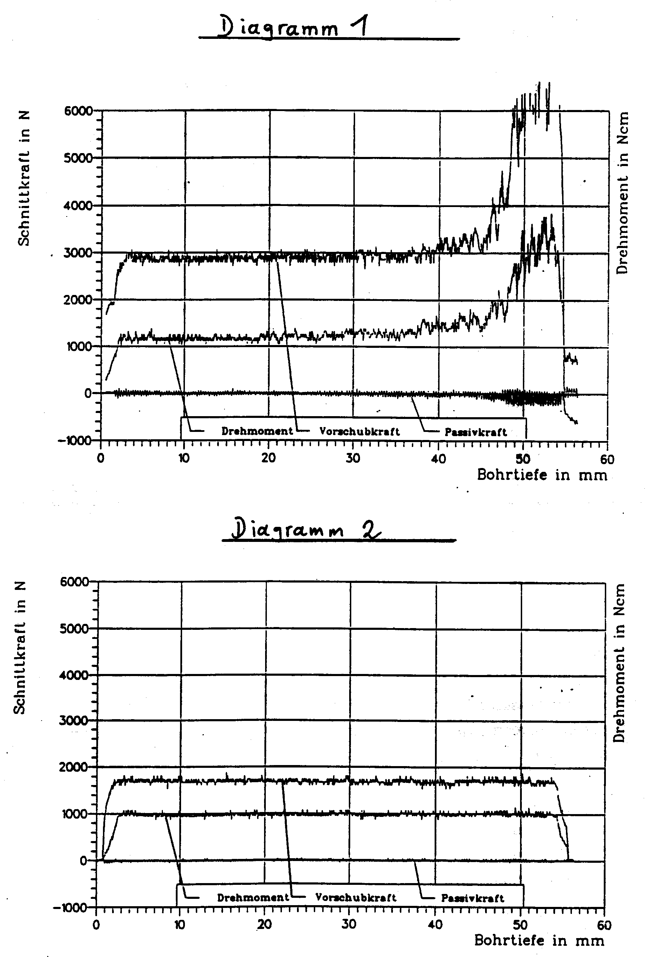

Die Wirkungsweise eines erfindungsgemäßen Bohrers soll nun insbesondere anhand der Fig.8-9 erläutert werden: In Fig.8 ist schematisch die Spanbildung im Wirkbereich der Bohrerspitze 6, also etwa in einem der Schnittlinie V-V in Fig.1 entsprechenden Bereich dargestellt. Wenn sich der Bohrer in Richtung des Pfeiles 12 dreht, wird von den Hauptschneiden 13,13', die in Fig.8 etwa in Richtung der Mittellinie 43 verlaufen, ein Span 44 abgehoben. Dieser bewegt sich mit fortschreitender Rotation des Bohrers in Richtung des Pfeiles 12 entlang der Spanfläche 9,9' und wird aufgrund deren Krümmung in Richtung des Pfeiles 45 abgelenkt und wendelförmig verformt. Der für die Außenkrümmung des Spans 44 maßgebliche Bereich der Spanfläche 9,9' ist jener an den Bohrerkern 18 angrenzende Hauptspanformbereich 34. Dieser Bereich weist den kleinsten Krümmungsradius der gesamten Spanfläche 9,9', nämlich den Spanformradius 35, auf und lenkt daher den Span 44 am stärksten ab. An seinem Innenumfang ist der Span 44 gestaucht, wie durch die Stauchungslinien 46 in Fig.8 und 9 angedeutet ist. Nachdem der Span 44 eine bestimmte Länge erreicht hat, kommt es häufig zu Spanbrüchen, vorzugsweise entlang der Stauchungslinien 46. Der Span wird mit fortschreitender Bohrtiefe vom Wirkort, nämlich dem Spitzenbereich des Bohrers in Richtung auf dessen Schaft 2 zubewegt. In diesen spitzenfernen Bereichen der Spannut 9,9' bzw. der Spankammer 36 ist der Bohrerkerndurchmesser 24 geringer und damit die Spannuttiefe 27 größer. Aufgrund der im Spitzenbereich gemäß Fig. 8 vorhandenen Krümmung des Hauptspanformbereiches 34 erhält der Span 44 eine entsprechende Krümmung und daher einen dieser Krümmung etwa entsprechenden Spandurchmesser 47. Mit zunehmender Entfernung von der Bohrerspitze 6 wird nun die Differenz zwischen der Spannuttiefe 27 und dem Spandurchmesser 47 zusehends größer. Die Folge ist, daß der Span bzw. die Spanbruchstücke in den spitzenfernen Bereichen nicht mehr an der Bohrlochinnenwandung, die annähernd der Hüllinie 26 in den Fig.8-9 entspricht, anliegen bzw. daran entlangreiben. Als Führungsfläche dient hier vielmehr nur noch der mit dem Außenumfang des Spans 44 in Kontakt stehende Spanflächenbereich. Die Führung des Spans 44 in den spitzenfernen Spannutenbereichen erfolgt daher praktisch nur noch über die genannten mit dem Außenumfang des Spans 44 in Kontakt stehenden Spanflächenbereichen (vgl. Fig.9). Die Folge ist, daß dem Spanabfluß mit zunehmender Entfernung von dem Ort der Spanentstehung ein geringerer Widerstand entgegengesetzt ist. Ein Spänestau mit den bekannten negativen Begleiterscheinungen, nämlich der Zunahme der Schnittkraft und der Temperatur sowohl des Werkstücks, also auch des Bohrers, sind wirksam verhindert.

Ein erfindungsgemäßer Bohrer kann vielfach nachgeschliffen werden, da er über praktisch seine gesamte Schneidlänge 8 eine dem ursprünglichen Spitzenbereich entsprechende Querschnittsform der Spannut 4,4' bzw. der Spankammer 36 aufweist. Wenn beispielsweise der Bohrer bis auf eine der Linie IV-IV in Fig.1 entsprechende Restlänge nachgeschliffen wurde, ist eine Querschnittsform des Bohrers erreicht, wie sie etwa jener in Fig.9 dargestellten entspricht. Allerdings würde der gebildete Span 44 auch in Kontakt mit der Bohrlochwand (Nullinie 26) stehen, wie in Fig.8 dargestellt. Der für die Formeigenschaften des Hauptspanformbereiches 34 maßgebliche Spanformradius 35 nimmt nämlich in Richtung zum Schaft 2 hin zu, so daß der entstehende Span 44 eine entsprechend größere Außenkrümmung und damit einen entsprechend größeren Spandurchmesser 47 hat. Dieser Durchmesser 47 würde dann etwa der Spannuttiefe 27 in Fig.9 entsprechen.

Die Differenz aus dem Bohrerdurchmesser 23 (D) und dem Bohrerkerndurchmesser 24 (D_{K}) entspricht der doppelten Spannuttiefe 27. Die Spannuttiefe ergibt sich somit aus D-D_{K}/2. Damit ein Span 44 in eine Spankammer 36 mit einer vorgegebenen Spannuttiefe 27 paßt, muß der Spanformradius 35 etwa die Hälfte der Spannuttiefe, also D-D_{K}/4 betragen. Kleinere Spanformradien 35 (R_{F}) sind unerwünscht, da dann das Zusammenwirken von Bohrungsinnenwandung und Spanfläche 9,9' nicht mehr gewährleistet ist. R_{F} kann jedoch größere Werte annehmen. Als Obergrenze wurde ein Spanformradius R_{F} max. von D-D_{K}/2,7 ermittelt.

Die Diagramme 1 und 2 stellen die Abhängigkeit der Schnittkraft und des Drehmoments eines Wendelbohrers in Abhängigkeit von der Bohrtiefe dar. Diagramm 1 zeigt die Verhältnisse bei einem Bohrer nach dem Stand der Technik (Werkzeug 1). Wie daraus hervorgeht, nimmt die Schnittkraft und das mit ihr korrelierte Drehmoment ab einer Bohrtiefe von etwa 40 mm langsam zu, um bei einer Bohrtiefe von etwa 45 mm sprunghaft anzusteigen.

Der analoge Versuch mit einem erfindungsgemäßen Bohrer (Werzeug 2) ist in Diagramm 2 dargestellt. Es ist deutlich erkennbar, daß einerseits sowohl die Schnittkraft als auch das Drehmoment deutlich unter den Vergleichswerten gemäß Diagramm 1 liegen und die Erhöhung dieser Parameter bei größeren Bohrtiefen unterbleibt. Es ergibt sich eine konstante Schnittkraft und ein konstantes Drehmoment über praktisch die gesamte Schneidlänge bzw. Bohrtiefe.

Die Versuchsbedingungen sowie die verschiedenen verwendeten Werkstoffe sind in der folgenden Tabelle aufgeführt:

### Werkstück: Radträger für PKW

| | | | |
|---|---|---|---|
| Werkstoff | 45M5 UA2 ¹⁾ | **Härte:** | 269HB ²⁾ |
| Bohrungsdurchmesser | 11 mm | **Bohrtiefe:** | 55 mm |

| | | | |
|---|---|---|---|
| 1) Französische AVNOR-Werkstoffnorm | | | |
| 2) Brinellhärte | | | |

### Maschine: Bearbeitungszentrum mit Kühlmittelzufuhr durch die Spindel, Kühlmitteldruck 18 bar

### Schnittdaten:

| | | |
|---|---|---|
| Drehzahl: | 2315 | 1/min |
| Schnittgeschwindigkeit: | 80 | m/min |
| Vorschubgeschwindigkeit | 695 | mm/min |
| Vorschub je Umdrehung: | 0,3 | mm |

### Werkzeug 1: Vollhartmetall Kühlkanalbohrer mit 4 Führungsfasen und konventioneller Spannutengeometrie, also konstantem Kerndurchmesser und konstantem Spannutenprofil von der Bohrerspitze bis zum Spannutenauslauf

- Schneidstoff:: PVD³)-beschichtetes Hartmetall des Anwendungsbereiches P40

### Bohrerspitzenanschliff entsprechend EP0249104A1

| | |
|---|---|
| Kerndurchmesser: | 3,2 mm |
| Spanformradius | 2,7 mm |
| Verhältnis (D-Dk)/Rs: | 2,9 |

### Werkzeug 2: Vollhartmetall Kühlkanalbohrer mit 4 Führungsfasen und erfindungsgemäßer Spannutengeometrie

- Schneidstoff:: PVD³)-beschichtetes Hartmetall des Anwendungsbereiches P40

3) Plasma-Vapor-Deposition

### Bohrerspitzenanschliff entsprechend EP0249104A1

| | |
|---|---|
| Kerndurchmesser an Bohrerspitze: | 3,2 mm |
| Kerndurchmesser am Spankammernauslauf: | 3,0 mm |
| Spanformradius an Bohrerspitze: | 2,0 mm |
| Spanformradius am Spankammernauslauf: | 2,5 mm |
| Verhältnis (D-Dk)/Rs an Bohrerspitze: | 3,9 |
| Verhältnis (D-Dk)/Rs am Spannkammernauslauf: | 3,2 |

### Bezugszeichenliste

- 1: Grundkörper
- 2: Schaft
- 3: Schneidteil
- 4: Spannut
- 4': Spannut
- 5: Mittellängsachse
- 6: Bohrerspitze
- 7: Hilfslinie
- 8: Schneidlänge
- 9: Spanfläche
- 9': Spanfläche
- 11: Auslauf
- 12: Pfeil
- 13: Hauptschneider
- 13': Hauptschneider
- 14: Hauptfreifläche
- 14': Hauptfreifläche
- 15: Nebenfreifläche
- 15': Nebenfreifläche
- 16: Führungsphase
- 16': Führungsphase
- 17: Arbeitsebene
- 18: Bohrerkern
- 21: Hilfslinie
- 22: Querrichtung
- 23: Bohrerdurchmesser
- 24: Bohrerkerndurchmesser
- 25: Auslauflänge
- 26: Hüllinie
- 27: Spannuttiefe
- 28: Nebenschneide
- 28': Nebenschneide
- 21: Krümmungsumkehrpunkt
- 32: Ellipse
- 33: Längsachse
- 34: Hauptspanformbereich
- 35: Spanformradius
- 36: Spankammer
- 37: Querschnittsflächenzuwachs
- 41: Spannutenbreite
- 42: Wendelrichtung
- 43: Mittellinie
- 44: Span
- 45: Pfeil
- 46: Stauchungslinie
- 47: Spandurchmesser
- α: Seitenfreiwinkel

## Patentansprüche

1. Wendelbohrer, insbesondere für Metalle, mit
- einem im wesentlichen zylindrischen in einen Schaft (2) und ein Schneidteil (3) gegliederten Grundkörper (1), dessen Mittellängsachse (5) die Rotationsachse des Wendelbohrers ist,
- mehreren in der Zylindermantelfläche des Schneidteils (3) eingeformten und vom Schaft (2) bis zur Bohrerspitze (6) durchgehend wendelförmig verlaufenden und jeweils eine Spankammer (36) bildende Spannuten (4,4'), und
- einem Bohrerkerndurchmesser, der von der Bohrerspitze (6) zum Schaft (2) hin zumindest in einem sich an die Bohrerspitze anschließenden Teilbereich kontinuierlich abnimmt,
gekennzeichnet durch
eine Querschnittsform der Spannut (4,4') bzw. einen Krümmungsverlauf der die Innenwandung der Spannut bildenden Spanfläche (9,9') derart, daß der für die Spanformung maßgebliche Hauptspanformbereich (34) der Spanfläche (9,9') einen mit zunehmender Entfernung von der Bohrerspitze (6) zunehmenden Spanformradius (35) aufweist.

2. Wendelbohrer nach Anspruch 1,
dadurch gekennzeichnet,
daß das Verhältnis (D - D_{K}) : R_{S} einen Wert zwischen 2,7 und 4,0 hat, wobei D der Bohrerdurchmessers (23), D_{K} der Bohrerkerndurchmesser (24) und R_{S} der Spanformradius (35) ist.

3. Wendelbohrer nach Anspruch 2,
dadurch gekennzeichnet,
daß das Verhältnis (D-D_{K}): R_{S} zumindest über einen Teil der Schneidlänge (8) konstant ist.

4. Wendelbohrer nach Anspruch 2,
dadurch gekennzeichnet,
daß sich das Verhältnis (D - D_{K}) : R_{S} über die Schneidlänge (8) gegenüber dem im Bereich der Bohrerspitze (6) vorhandenen Wert um maximal 40% verkleinert.

5. Wendelbohrer nach einem der Ansprüche 1 bis 4,
dadurch gekennzeichnet,
daß der Bohrerkerndurchmesser (24) in einem Bereich von 0,22 D bis 0,35 D liegt.

6. Wendelbohrer nach einem der Ansprüche 1 bis 5,
dadurch gekennzeichnet,
daß die Verjüngung des Bohrerkerndurchmessers (24) bezogen auf 100 mm Bohrerlänge 0,2 mm bis 0,8 mm beträgt.

7. Wendelbohrer nach einem der Ansprüche 1 bis 6,
dadurch gekennzeichnet,
daß er ein Vollhartmetallbohrer ist.

## Claims

1. Twist drill, in particular for metals, having
- an essentially cylindrical basic structure (1) which is divided into a shank (2) and a body (3) and the central longitudinal axis (5) of which is the axis of rotation of the twist drill,
- a plurality of flutes (4, 4') which are cut into the circumferential surface of the body (3), run continuously, in a helical fashion, from the shank (2) to the drill point (6) and each form a chip-removal chamber (36), and
- a drill web diameter which decreases continuously from the drill point (6) towards the shank (2) at least in a partial region which adjoins the drill point,
characterized by
a cross-sectional shape of the flute (4, 4') or a radius of curvature of the face (9, 9') which forms the inner wall of the flute which is such that the main chip-shaping region (34), which is the decisive influence on the chip shaping, of the face (9, 9') has a chip-shaping radius (35) which increases with increasing distance from the drill point (6).

2. Twist drill according to Claim 1, characterized in that the ratio (D-D_{K}):R_{S} has a value of between 2.7 and 4.0, where D is the drill diameter (23), D_{K} is the drill web diameter (24) and R_{S} is the chip-shaping radius (35).

3. Twist drill according to Claim 2, characterized in that the ratio (D-D_{K}):R_{S} is constant at least over part of the cutting length (8).

4. Twist drill according to Claim 2, characterized in that the ratio (D-D_{K}):R_{S} is reduced by at most 40%, along the cutting length (8), with respect to the value present in the region of the drill point (6).

5. Twist drill according to one of Claims 1 to 4, characterized in that the drill web diameter (24) lies in a range from 0.22 D to 0.35 D.

6. Twist drill according to one of Claims 1 to 5, characterized in that the taper of the drill web diameter (24) amounts to 0.2 mm to 0.8 mm, based on a drill length of 100 mm.

7. Twist drill according to one of Claims 1 to 6, characterized in that it is made entirely of cemented carbide.

## Revendications

1. Foret hélicoïdal, en particulier pour métaux, comportant :
- un corps de base (1) sensiblement cylindrique divisé en une tige (2) et une partie de coupe (3), dont l'axe longitudinal médian (5) est l'axe de rotation du foret hélicoïdal,
- plusieurs goujures (4, 4') formées dans la surface enveloppe cylindrique de la partie de coupe (3) et s'étendant en hélice de manière continue depuis la tige (2) jusqu'à la pointe de foret (6) et formant chacune une chambre à copeaux (36), et
- un diamètre de noyau de foret qui s'amincit de manière continue depuis la pointe de foret (6) jusqu'à la tige (2) au moins dans une région partielle adjacente à la pointe de foret (6),
caractérisé en ce que la forme de section de la goujure (4, 4') ou le tracé de courbure de la surface de coupe (9, 9') formant la paroi intérieure de la goujure sont tels que la région (34) principale de formation de copeaux de la surface de coupe (9, 9'), déterminante pour la formation des copeaux, présente un rayon de formation de copeaux (35) qui augmente avec l'augmentation de l'éloignement de la région de la pointe de foret (6).

2. Foret hélicoïdal selon la revendication 1, caractérise en ce que le rapport (D-D_{K}) : R_{S}, dans lequel D est le diamètre (23) du foret, D_{K} est le diamètre du noyau de foret (24), et R_{S} est le rayon de formation de copeaux (35), a une valeur entre 2,7 et 4,0.

3. Foret hélicoïdal selon la revendication 2, caractérisé en ce que le rapport (D-D_{K}) : R_{S} est constant au moins sur une partie de la longueur de coupe (8).

4. Foret hélicoïdal selon la revendication 2, caractérisé en ce que le rapport (D-D_{K}) : R_{S} s'amoindrit d'au maximum 40 % sur la longueur de coupe (8) par rapport à la valeur existant dans la région de la pointe de foret (6).

5. Foret hélicoïdal selon l'une quelconque des revendications 1 à 4, caractérisé en ce que le diamètre (24) du noyau de foret se trouve dans une plage de 0,22 D à 0,35 D.

6. Foret hélicoïdal selon l'une quelconque des revendications 1 à 5, caractérisé en ce que le rétrécissement du diamètre (24) de noyau de foret, rapporté à une longueur de foret de 100 mm, est compris entre 0,2 mm et 0,8 mm.

7. Foret hélicoïdal selon l'une quelconque des revendications 1 à 6, caractérisé en ce que celui-ci est un foret massif en métal dur.
